Europäisches Patentamt

European Patent Office

Office européen des brevets

(11) Publication number: **0 443 276 A1**

# EUROPEAN PATENT APPLICATION

(21) Application number: **90400020.5**

(22) Date of filing: **19.02.90**

(51) Int. Cl.⁵: **G01F 11/04, B05C 5/04**

(43) Date of publication of application:
**28.08.91 Bulletin 91/35**

(84) Designated Contracting States:
**AT BE CH DE DK ES FR GB GR IT LI LU NL SE**

(71) Applicant: **NORDSON CORPORATION**
**28601 Clemens Road**
**Westlake Ohio 44145-1148(US)**

(72) Inventor: **Vaganay, Bruno**
**21, Avenue des Platanes**
**F-77410 Claye-Souilly(FR)**

(74) Representative: **Martin, Jean-Jacques et al**
**Cabinet REGIMBEAU 26, Avenue Kléber**
**F-75116 Paris(FR)**

(54) Apparatus for intermittent application of adhesive flowable material.

(57) An apparatus (10) for intermittently discharging flowable material onto a substrate comprises a manifold (12) formed with a bore (14) which carries an axially movable piston (16). The piston (16) divides the bore (14) into a first chamber (18) on one side of the piston (16) and a second chamber (20) on the other side thereof each having an inlet (22, 26) connected to a supply device such as a dispensing gun or module, and an outlet (24, 28) connected to a discharge device such as a dispensing module. The supply devices and discharge devices are selectively moved to a position to fill the first chamber (18) with flowable material and force the piston (16) to move axially within the bore (14) toward the second chamber (20) to discharge flowable material therefrom, and thereafter to fill the second chamber (20) with flowable material so that the direction of movement of the piston (16) is reversed and flowable material is discharged from the first chamber (18). Stops (80, 82) are provided to control the extent of axial movement of the piston (16) within the bore (14) which, in turn, controls the volume of flowable material discharged from the chambers (18, 20) in response to movement of the piston (16).

FIG. 1

# APPARATUS FOR INTERMITTENT APPLICATION OF ADHESIVE FLOWABLE MATERIAL

## Field of the Invention

This invention relates to applicators, and, more specifically, to an apparatus for intermittently discharging accurately metered quantities of flowable material onto a substrate.

## Background of the Invention

Hot melt thermoplastic adhesives have been widely used in industry for adhering many types of products, and are particularly useful in applications where quick setting time is advantageous. In the packaging and cartoning industry, for example, beads of adhesive are intermittently ejected from the discharge outlet of a dispensing device onto the flaps of a carton which are thereafter folded to form the completed carton. In other applications, dispensing devices extrude a continuous bead of adhesive onto a substrate to obtain the desired bond.

A variety of dispensing devices have been employed to discharge a continuous or intermittent bead of adhesive and other flowable materials onto a substrate. Dispensing devices of this general type are typically guns having a gun body formed with a delivery passageway communicating with a source of molten hot melt adhesive or other flowable material. A nozzle is mounted to the gun body in communication with the delivery passageway for receiving the flowable material and discharging it as an extruded bead.

In order to control the flow of material from the spray gun, a plunger is carried within the interior of the delivery passageway in the gun body which is movable between an open and closed position. In the closed position, a tapered or rounded end of the plunger is forced into engagement with a seat formed in the gun body within the delivery passageway at the entrance to the nozzle. In this position, the plunger blocks the flow of material from the delivery passageway into the nozzle so that the flowable material is maintained under pressure within the delivery passageway of the gun body. The plunger is movable to an open position wherein its tapered or rounded end disengages the seat and permits the flow of material from the delivery passageway in the gun body into the nozzle.

A number of designs have been employed to effect movement of the plunger between an open and closed position. In some dispensing guns, the plunger is carried by one or more seals which separate the delivery passageway from an air chamber connected to a source of pressurized operating air. The plunger extends into this air chamber such that when pressurized air is introduced therein, the plunger is moved axially to an open position, i.e., its tapered end is lifted from the seat within the delivery passageway at the entrance to the nozzle. A compression spring is often used to return the plunger to a closed position when the flow of pressurized air to the air chamber in the gun body is terminated. Alternatively, the plunger can be returned to the closed position by pressurized air acting in the opposite direction on the plunger. In other spray gun designs, movement of the plunger to an open and closed position is effected by an electrically operated solenoid.

Dispensing guns of the type described above are useful in a wide variety of applications, but some deficiencies have been observed particularly in instances wherein an accurately metered quantity of flowable material must be applied intermittently to a substrate. It has been found that after a period of use of the dispensing guns described above, the seals or mountings which carry the plunger within the gun body, as well as the plunger itself, become coated with residue or other materials from the flowable material and vapor passing through the gun body. This layer or coating on such elements, as it progressively builds up thereon, can cause a variation in the timing and/or speed of movement of the plunger between the open and closed position. As a result, the quantity of flowable material expelled from the delivery passageway of the gun body into the nozzle can vary to some degree, particularly when the spray gun is operated intermittently, i.e., when the plunger is rapidly moved between an open and closed position. In some applications, such variation in the quantity of flowable material intermittently discharged from the dispensing gun is unacceptable.

## Summary of the Invention

It is therefore among the objectives of this invention to provide an apparatus for discharging adhesive or other flowable materials which is capable of dispensing an accurately metered quantity of flowable material intermittently onto a substrate, which is capable of adjusting the volume of flowable material dispensed, which is compact in design and which has a minimum of moving parts.

These objectives are accomplished in an apparatus for discharging hot melt adhesive or other flowable material comprising a manifold formed with a throughbore which carries a piston axially movable therein. The piston separates the throughbore into two compartments or chambers each having an inlet connected to a supply device, e.g., a dispensing gun, and an outlet connected to a discharge device, e.g., another dispensing gun. The supply devices are each movable between an open position wherein flowable material is introduced through the inlets into the chambers on either side of the piston, and a closed position in which the flow of flowable material into the chambers is terminated. Similarly, the discharge devices are movable between an open position to permit the discharge of flowable material from the chambers to a nozzle, and a closed position wherein such chambers can be filled with flowable material.

This invention is predicated upon the concept of intermittently discharging an accurately metered quantity of flowable material by alternately filling the chambers on either side of the piston with flowable material so that as one chamber is being filled with flowable material, the piston is forced to move within the throughbore toward the other chamber to discharge the flowable material therefrom. Alternately filling and discharging flowable material from the chambers is achieved by selectively opening and closing the supply devices and discharge devices of both chambers.

For example, the supply device for the chamber on one side of the piston, e.g., the first chamber, is opened, and the discharge device at the outlet to such first chamber is simultaneously closed. This permits the introduction of flowable material through the inlet into the first chamber on one side of the piston without leakage through the outlet of such first chamber. At the same time, the supply device at the inlet to the chamber on the opposite side of the piston, e.g., the second chamber, is closed, and the discharge device at the outlet of such second chamber is opened. In such positions, flowable material can be discharged from the second chamber through the open discharge device, but the flow of flowable material therein through the closed supply device is prevented.

In response to pressurization of the first chamber, i.e., as it fills with flowable material, the piston is forced to move axially within the throughbore toward the second chamber. This axial movement of the piston forces the flowable material within the second chamber out its outlet and through the open, discharge device of such second chamber to a nozzle for discharge onto a substrate. As a result, the second chamber on one side of the piston is emptied of flowable material while the first chamber on the opposite side of the piston is filled.

The position of the supply device and discharge device in each chamber is reversed in order to discharge flowable material from the first chamber and fill the second chamber with flowable material. The second chamber is filled with flowable material by simultaneously opening the supply device at its inlet and closing the discharge device associated with the outlet thereof. At the same time, the supply device for the first chamber is closed and its discharge device is opened. In response to pressurization of the second chamber as it fills with flowable material, the piston is forced in the opposite direction toward the first chamber to discharge the flowable material therein through its outlet and the open discharge device thereat. The apparatus of this invention therefore discharges flowable material intermittently, first from one chamber and then the other, as the piston is made to axially reciprocate within the throughbore of the manifold.

One advantage of this invention is that axial movement of the piston from one chamber of the throughbore toward the other is effective to discharge an accurately metered quantity of flowable material through an associated discharge device to a nozzle, i.e., the quantity of flowable material discharged is equivalent to the volume of flowable material which the piston forces out of each chamber. In the presently preferred embodiment, adjustment structure is provided to vary the volume of flowable material discharged from either one or both of the chambers in the manifold. This adjustment structure comprises an adaptor which is mounted to the manifold at one or both ends of the throughbore. Each adaptor carries a stop pin extending into one of the chambers on opposite sides of the piston. The axial position of the stop pin is adjustable such that the pin engages the piston at different locations within the throughbore. By controlling the extent of axial movement of the piston toward one or both of the chambers, the volume of flowable material discharged from such chamber is correspondingly varied as desired.

In an alternative embodiment of this invention, the volume of flowable material discharged from the chambers is varied by forming one of the chambers larger than the other, e.g., with a larger diameter. The piston is also formed with a larger diameter end corresponding to the diameter of the larger chamber so that movement of the piston in the direction of the larger chamber results in the discharge of a relatively large quantity of flowable material, and movement of the piston in the opposite direction results in the discharge of a comparatively small quantity of flowable material from such smaller diameter chamber.

Another advantage of this invention is that its design is compact and there are a limited number of moving parts. Movement of the piston is effected solely by pressurization of the chamber on either side of the piston. This eliminates any separate drive mechanism for moving the piston within the throughbore of the manifold. Because the metering device, i.e., the piston, is located close to the discharge devices and their associated nozzles, the response of the apparatus is excellent. That is, movement of the piston results in essentially an immediate discharge of flowable material through a nozzle. This feature is particularly useful in applications wherein flowable material must be applied in intermittent beads at a rapid rate.

In one presently preferred embodiment of this invention, the outlet of each chamber in the manifold is connected to a discharge device such as a dispensing gun which includes its own nozzle for discharging a bead of flowable material. When moved to an open position, each of these guns receive flowable material discharged from a chamber by movement of the piston and each gun dispenses a bead of flowable material having a volume equal to the volume of flowable material forced by the piston from such chamber. These guns can be mounted to the manifold at different locations to obtain a desired pattern of intermittent beads of flowable material along the width of a given substrate.

In an alternative embodiment, a discharge device such as a dispensing gun or module is connected to the outlet of each chamber and these modules discharge flowable material into a common outlet passageway formed in the manifold which is connected to a single nozzle. Intermittent beads of flowable material are therefore discharged from such single nozzle which is alternately supplied with flowable material first from one of the modules and then the other as the piston axially moves within the throughbore of the manifold. It is contemplated that this embodiment of the invention would be employed in applications wherein an accurately metered quantity of flowable material is required, but only to form a single bead.

Description of the Drawings

The structure, operation and advantages of the presently preferred embodiment of this invention will become further apparent upon consideration of the following description, taken in conjunction with the accompanying drawings, wherein:

Fig. 1 is a schematic view of one embodiment of the apparatus for discharging adhesive or other flowable material of this invention;
Fig. 2 is a front, elevational view of the embodiment illustrated in Fig. 1;
Fig. 3 is a side elevational view, in partial cross section, of the apparatus in Fig. 2;
Fig. 4 is an enlarged cross sectional view of the piston movement adjustment structure of this invention;
Fig. 5 is a schematic view, similar to Fig. 1, of an alternative embodiment of the apparatus herein;

Fig. 6 is a side elevational view of the embodiment of Fig. 5, in partial cross section;
Fig. 7 is a front elevational view of the apparatus shown in Figs. 5 and 6; and
Fig. 8 is a view similar to Fig. 5 but illustrating an alternative embodiment of the chambers and piston.

Detailed Description of the Invention

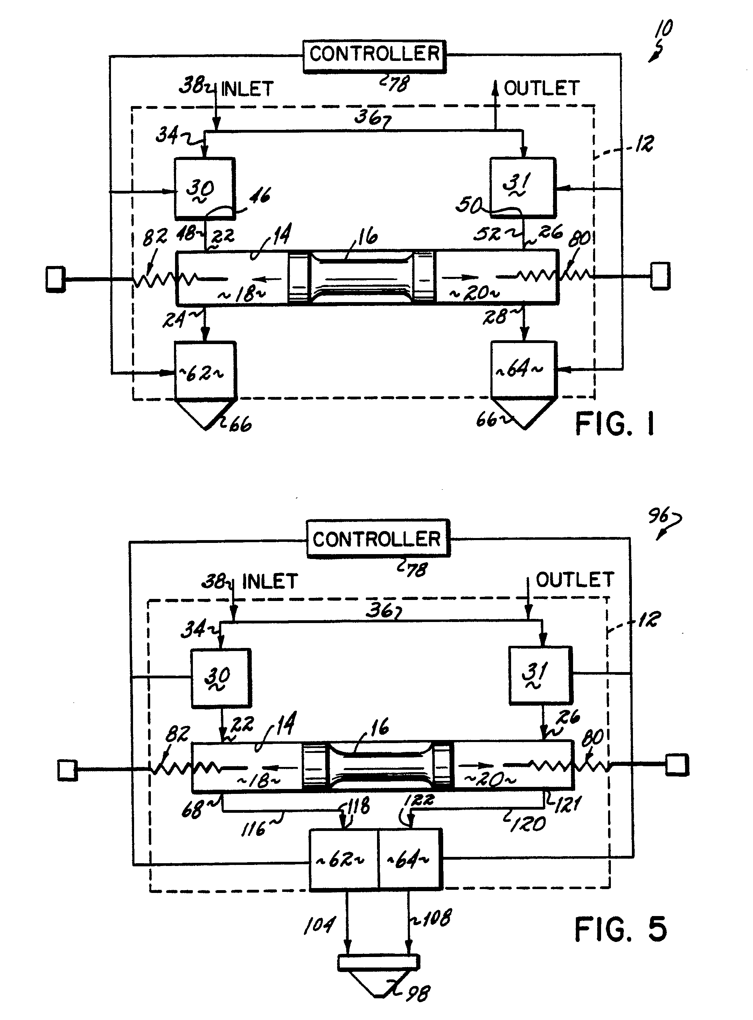

Referring now to Figs. 1-4, one presently preferred embodiment of the discharge apparatus 10 is illustrated. The apparatus 10 comprises a manifold 12 formed with a throughbore 14 within which a piston 16 is axially movable. The piston 16 is provided with O-rings 17 at each end to seal against the wall of the throughbore 14, and divides the throughbore 14 into a first chamber 18 on one side of the piston 16, and a second chamber 20 on the opposite side of the piston 16. The first chamber 18 is formed with an inlet 22 and an outlet 24, and the second chamber 20 is formed with an inlet 26 and an outlet 28. As discussed below, an adhesive such as hot melt thermoplastic adhesive or other flowable material is introduced into each of the chambers 18, 20 through their inlets 22, 26, respectively, and is intermittently discharged from their outlets 24, 28 to form intermittent beads on a substrate.

In the presently preferred embodiment, flowable material is supplied to the chambers 18, 20, and is discharged therefrom, through dispensing modules connected to the inlets and outlets of such chambers 18, 20. These dispensing modules are essentially valves of the type which are opened in response to the supply of pressurized air, and closed by a return spring when the supply of pressurized air is terminated. These dispensing modules are commercially available from the assignee of this invention, Nordson Corporation, of Amherst, Ohio, under the designation "H 20". It is contemplated that other types of valve designs could be employed without departing from the scope of the invention, and the detailed construction of the modules herein forms no part of this invention per se.

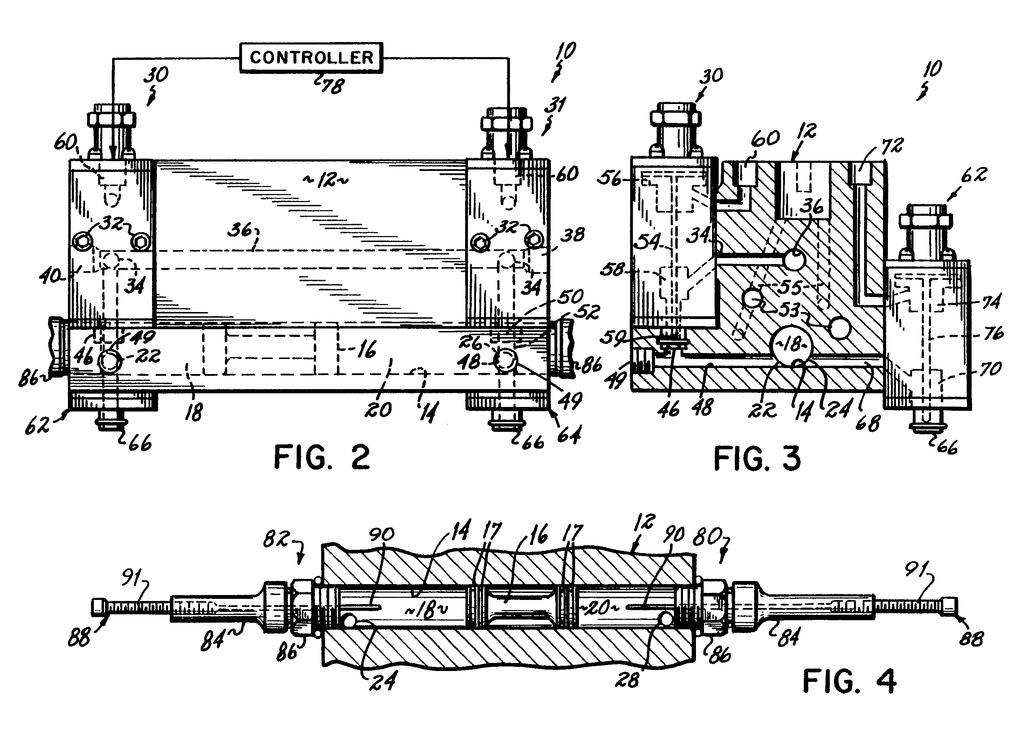

A first supply module 30 and a second supply module 31 are each mounted by bolts 32 to the manifold 12 in position to receive flowable material through a pair of feeder passageways 34, each of which is connected to a supply line 36 formed in the manifold 12. As illustrated in Fig. 2, this supply line 36 extends through the manifold 12 and has an inlet 38 at one end and an outlet at the opposite end which is closed by a fitting 40. The structure and operation of supply modules 30, 31 is identical, and for ease of illustration only the details of supply module 30 are shown and discussed herein.

As shown in Figs. 1-3, the first supply module 30 has a discharge outlet 46 connected to a transfer passageway 48 formed in the manifold 12. This transfer passageway 48 carries a plug 49 at one end and its opposite end is connected to the inlet 22 of the first chamber 18. Similarly, the second supply module 31 has a discharge outlet 50 connected to a transfer passageway 52 formed in the manifold 12 which extends to the inlet 26 of the second chamber 20, as schematically shown in Fig. 1. The first and second supply modules 30, 31 are effective to transmit flowable material from the supply line 36, through the transfer passageways 48, 52, respectively, and then into the first and second chambers 18, 20. The flowable material such as hot melt adhesive within such lines is maintained in a molten state by heaters 53 carried in the manifold 12 which are supplied with power from electric lines located in passages 55 formed in the manifold 12.

As schematically illustrated in Fig. 3, the first supply module 30 has a plunger 54 which has one end mounted within an air chamber 56 formed at the top of the supply module 30. The plunger 54 extends through a chamber 58 which receives flowable material from the feeder passageway 34 and is formed with a tapered, lowermost end 59 which engages a seat (not shown) at the entrance to the discharge outlet 46 of supply module 30. The plunger 54 is axially movable within supply module 30 between an open and closed position. In the closed position, the lowermost end 59 of plunger 54 engages the seat to block the flow of flowable material through the discharge outlet 46. In the open position, the plunger 54 is moved to disengage the seat and permit the flow of flowable material through discharge outlet 46.

In the presently preferred embodiment, the axial movement of the plunger 54 to an open position is obtained by the supply of pressurized air to module 30, and a compression spring returns the plunger 54 to a closed position. The manifold 12 is formed with an air supply passageway 60 which is connected to the air chamber 56 with the first supply module 30 mounted to the manifold 12 as shown in Fig. 3. Pressurized air is supplied through the passageway 60 into the air chamber 56 which lifts the plunger 54 upwardly as viewed in Fig. 3, to an open position, wherein flowable material from the connector passageway 34 and chamber 58 is permitted to flow through the discharge outlet 46 of supply module 30, into the transfer passageway 48 and then through inlet 22 into the first chamber 18. The plunger 54 is returned to a closed position by operation of a spring (not shown) when the flow of air through air supply passageway 60 is terminated. The second supply module 31 operates in the identical fashion to supply flowable material into the second chamber 20.

Referring to Figs. 2 and 3, a first discharge module 62 and a second discharge module 64, each carrying a nozzle 66, are mounted to the manifold 12 in position to receive flowable material discharged from the first chamber 18 and second chamber 20, respectively. For ease of illustration, only the first discharge module 62 is shown in detail in Fig. 3, it being understood that the second discharge module 64 is structurally and functionally identical.

The manifold 12 is formed with a discharge passageway 68 which is connected at one end to the outlet 24 of first chamber 18 and at the other end to a chamber 70 formed in the first discharge module 62. An air supply passageway 72 is formed in the manifold 12 which is connected to an air chamber 74 formed in the first discharge module 62. The first discharge module 62 opens and closes in the identical manner as the first supply module 30 described above, i.e., when pressurized air is supplied through the passageway 72 into air chamber 74, a plunger 76 carried within the module 62 is moved to an open position allowing flowable material to flow from the discharge passageway 68, through a chamber 70 and out the nozzle 66 carried by the first discharge module 62. A return spring (not shown) moves the plunger 76 back to a closed position when the flow of air through air supply passageway 72 is terminated. The second discharge module 64 operates in the identical manner to permit the discharge flow material from the second chamber 20.

As schematically illustrated in Fig. 1, a controller 78 is operatively connected to the first and second supply modules 30, 31 and to the first and second discharge modules 62, 64. This controller 78 is preferably a commercially available air flow control device in which a solenoid connected to a source of pressurized air is provided for each module 30, 31, 62 and 64. The solenoids (not shown) are operated by a driver circuit such as that disclosed in U.S. Patent No. 4,453,652, the disclosure of which is incorporated by reference in its entirety herein. In response to turn-on and turn-off signals, the driver circuit of the controller 78 is effective to open and close the solenoids and thus control the supply of pressurized air to each of the modules 30, 31, 62 and 64 to either move the plungers thereof to an open position to permit the discharge of flowable material therethrough, or to allow the return springs to operate and return the plungers to a closed position and thus prevent the flow of flowable material therethrough. The controller 78 is effective to sequence the operation of the modules 30, 31, 62 and 64 herein as follows.

Referring to Fig. 1, the controller 78 is operative to supply pressurized air to the first supply module 30, thus moving it to an open position, and to simultaneously terminate the flow of air to the first discharge module 62, thus moving it to a closed position. Flowable material is therefore permitted to flow from the first supply module 30 through the inlet 22 and into first chamber 18, as described above. The first discharge module 62 is closed to prevent leakage of flowable material through the outlet 24 of first chamber 18. At the same time, the controller 78 is operative to terminate the flow of pressurized air to the second supply module 31, thus moving it to a closed position to prevent the flow of flowable material through the inlet 26 into the second chamber 20. Simultaneously, the second discharge module 64 is supplied with pressurized air to move it to an open position and thus permit the discharge of flowable material through the outlet 28 of second chamber 20 and then through the second discharge module 64 to nozzle 66.

With the supply modules 30, 31 and discharge modules 62, 64 in the positions described above, the first chamber 18 fills with flowable material and becomes pressurized. This pressurization of the first chamber 18 forces the piston 16 to move axially to the right within throughbore 14 as viewed in Fig. 1, i.e., toward the second chamber 20. Such axial movement of the piston 16 forces flowable material contained within second chamber 20 through the outlet 28 and into second discharge module 64 from which it is discharged through nozzle 66 onto a substrate.

The piston 16 continues its movement to the right, or toward the second chamber 20, until it impacts a stop 80, the details of which are described below. At this time, the controller 78 is operative to reverse the direction of movement of piston 16 as follows. Pressurized air is supplied by the controller 78 to the second supply module 31 moving it to an open position and thus permitting the flow of flowable material through the inlet 26 into the second chamber 20. In order to prevent the discharge of flowable material from the outlet 28 of second chamber 20, pressurized air to the second discharge module 64 is terminated, thus allowing it to close. At the same time, the controller 78 terminates the flow of pressurized air to the first supply module 30 which permits it to move to a closed position and thus prevents the flow of flowable material into the first chamber 18. Simultaneously, the first discharge module 62 is pressurized with air thus moving it to an open position. This permits the flow of flowable material out of the first chamber 18 through outlet 24, and then into the first discharge module 62 for discharge through nozzle 66.

With each of the modules 30, 31, 62 and 64 in the position described above, flowable material enters into the second chamber 20 and forces the piston 16 to move axially to the left as viewed in Fig. 1, i.e., toward the first chamber 18. The flowable material previously introduced into the first chamber 18 is now discharged therefrom in response to movement of the piston 16, i.e., such flowable material moving through the outlet 24 and into first discharge module 62 for discharge through nozzle 66. Movement of the piston 16 toward the first chamber 18 is terminated upon engagement of the piston 16 with a second stop 82 which extends into the first chamber 18.

The above-described operation of the discharge apparatus 10 results in the intermittent discharge of flowable material first through one of the first and second discharge modules 62 and 64, and then the other. Flowable material is discharged by the reciprocating axial movement of piston 16 within throughbore 14, and such movement is effected solely by alternately pressurizing the first and second chambers 18, 20 as they are filled with flowable material from the first and second supply modules 30, 31, respectively.

One advantage of this invention is that an accurately metered quantity of flowable material is dispensed from both the first and second discharge module 62, 64, which is equal to the volume of flowable material forced out of the first and second chambers 18, 20 by the piston 16. This quantity or volume of flowable material within first and second chamber 18, 20 can be varied by altering the position of stops 80 or 82 as desired. Referring to Fig. 4, each stop 80, 82 comprises an adaptor 84 which is threaded into engagement with the manifold 12 on opposite ends of the throughbore 14. The adaptor 84 is secured in place to the manifold 12 by a bolt 86. An elongated stop pin 88 is carried by the adaptor 84 which has an inner end 90 extending into one of the chambers 18 or 20. The outer end 92 of stop pin 88 is threaded and mates with threaded bore formed at the outer end of adaptor 84. In response to rotation of the outer end 92 of stop pin 88, the position of its inner end 90 within the first and second chambers 18 or 20 is varied which thus controls the extent of the axial movement of piston 16 within the throughbore 14. In turn, the volume or quantity of flowable material discharged from the first or second chambers 18, 20 is correspondingly controlled. As a result, an accurate and readily variable quantity of flowable material is obtained from each nozzle 66 of apparatus 10 as required for a particular application.

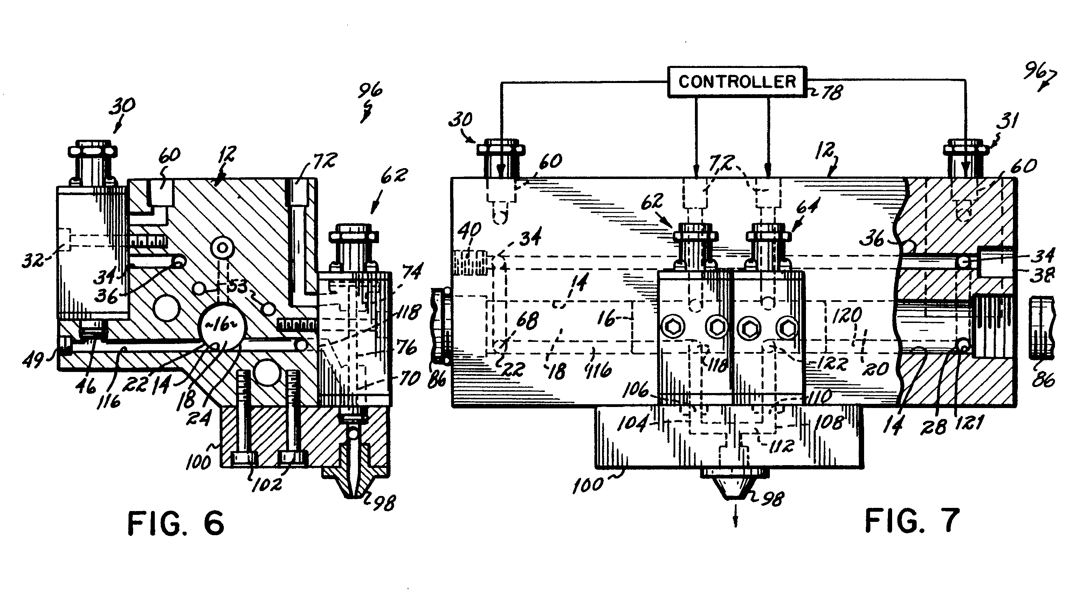

Referring now to Figs. 5-7, an alternative embodiment is illustrated of a discharge apparatus 96. In the embodiment of Figs. 1-4, the first and second discharge modules 62, 64 each had a separate nozzle 66, thus producing two beads of flowable material, one from each nozzle 66. The discharge apparatus 96 illustrated in Figs. 5-7 operates in substantially the identical manner as discharge apparatus 10, except that the discharge modules both direct flowable material into a single nozzle 98. For purposes of the present description, structural elements of apparatus 96 which are common to that of apparatus 10 are given the same reference number in Figs. 5-7 as is shown in Figs. 1-4.

In the embodiment of Figs. 5-7, a connector block 100 is mounted to the base of manifold 12 by mounting bolts 102. As best shown in Fig. 7, the connector block 100 is formed with a first branch line 104 connected to the discharge outlet 106 of first discharge module 62, and a second branch line 108 connected to the discharge outlet 110 of second discharge module 64. These branch lines 104, 108 connect to a common outlet passageway 112, which, in turn, is connected to the single nozzle 98.

As shown in Fig. 7, the first and second discharge modules 62, 64 are mounted side-by-side to the manifold 12 instead of on opposite ends thereof as in the embodiment of Figs. 1-4. The location of the air supply passageways 60, 72 which operate the first and second discharge modules 62, 64 is therefore toward the center of manifold 12 as shown in Fig. 7. Additionally, the manifold 12 is formed with a bore 116 which extends between the discharge passageway 68 connected to the first chamber 18, and the inlet 118 of first discharge module 60. Similarly, a bore 120 interconnects the discharge passageway 121 from the second chamber 20 with the inlet 122 of second discharge module 64. These bores 116, 120 transfer flowable material to the centrally located discharge modules 62, 64 on manifold 12 for subsequent discharge through their common nozzle 98.

The operation of discharge apparatus 96 of Figs. 5-7 is essentially identical to that of discharge apparatus 10 described above. The only difference in such operation is that each of the discharge modules 62, 64 alternately supply flowable material through the common nozzle 98 so that a single intermittent bead of flowable material is applied to a substrate instead of two distinct beads as in the Fig. 1-4 embodiment.

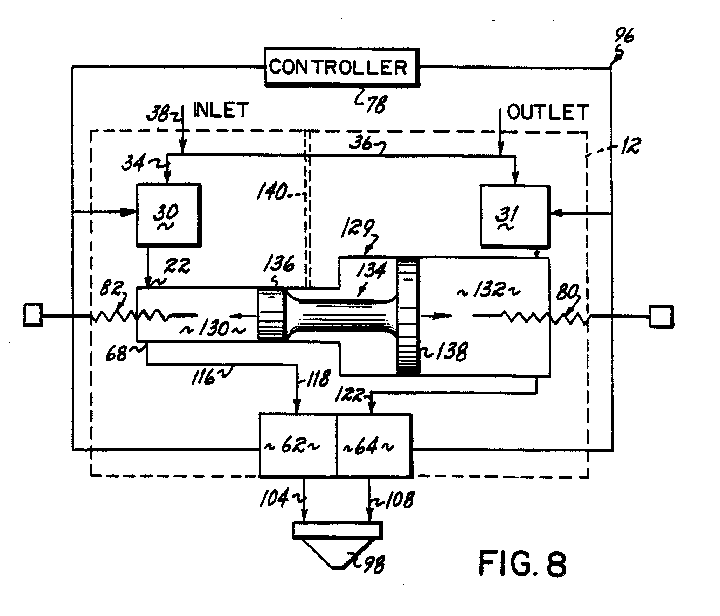

Referring now to Fig. 8, an alternative configuration of a throughbore in manifold 12 is illustrated which could be employed with the embodiments of Figs. 5-7 as shown in Fig. 8, or the embodiment of Figs. 1-3. As shown in Fig. 8, a stepped throughbore 129 is formed in manifold 12 defining a first chamber 130 of smaller diameter and a second chamber 132 of larger diameter. A piston 134 is movable within throughbore 14 having a first end 136 with substantially the same diameter as first chamber 130 and a second end 138 having substantially the same diameter as the larger, second chamber 132. The embodiments disclosed in Figs. 1-3 and Figs. 5-7 operate in the identical fashion as described above when employing the stepped throughbore 129 of Fig. 8, except that a larger quantity of flowable material is discharged when the piston 134 moves toward the larger second chamber 132, and a comparatively small amount of flowable material is discharged when the piston 134 is moved toward the smaller diameter first chamber 130. Because the volume of the chamber 132 is greater than that of chamber 130, a relief opening 140 is formed in the manifold 14 which connects the throughbore 129 to atmosphere and thus provides a path for the ingress and egress of air into the space between the two ends 136, 138 of piston 134.

While the invention has been described with reference to a preferred embodiment, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof.

For example, a controller 78 is illustrated in the Figs. as a means for opening and closing the modules 30, 31, 62 and 64 in the desired sequence, as described above. The controller 78 is responsive to turn-on and turn-off signals which could be generated in a variety of ways depending upon the requirements of a given application. If automatic operation of the apparatus 10 and 96 is desired, turn-on and turn-off signals could be provided by timers set in accordance with the speed of the piston 16 and distance it travels in moving from the first chamber 18 to the second chamber 20 and back. Alternatively, sensors could be provided on the stop pins 88 of each stop 80, 82 which are activated upon contact by the piston 16 to send turn-on/turn-off signals to the controller 78. If manual operation of the controller 78 is desired, turn-on and turn-off signals could be provided by manually operated switches connected to the controller 78.

Additionally, it is contemplated that the sequenced flow of pressurized air could be directed to the modules 30, 31, 62, 64 by means other than a controller 78. For example, four-way valves are commercially available which are operative to permit the flow of fluid in different directions therethrough, and such valves could be adapted for the requirements of this application. It is also contemplated that solenoid-actuated modules could be substituted for the air-operated modules 30, 31, 62 and 64 without departing from the scope of this invention.

A further modification which is contemplated in each of the embodiments of this invention involves the inlets and outlets to each of the chambers 18 and 20. In the Figs., the first chamber 18 has a separate inlet 22 and outlet 24, and the second chamber 20 has a separate inlet 26 and outlet 28. It is contemplated, however, that a single opening could be formed in each of the chambers 18 and 20 instead of separate inlets and outlets. In this alternative embodiment, the supply module 30 and discharge module 62 associated with chamber 18, for example, are both connected to a single opening in chamber 18 with a valve positioned at the entrance to such opening. The valve is operative to either permit the supply of flowable material into chamber 18 through supply module 30 while closing the flow of flowable material to the discharge module 62, or to permit the discharge of flowable material from chamber 18 by opening the path to discharge module 62 and simultaneously closing the path to supply module 30. Such valve is operated by the controller 78 to properly sequence the supply and discharge of flowable material from chamber 18, as described above. The supply module 31 and discharge module 64 would be operated in the same manner with a separate valve connected to a single opening in chamber 20.

The discharge apparatus 10 of this invention has been illustrated in an application wherein one or more beads of a flowable material such as hot melt adhesive are discharged onto a substrate. It is contemplated that essentially any type of flowable material could be discharged from the apparatus 10, e.g., other thermoplastic materials, polymers, resins, etc., in a hot or cold state. Additionally, it is contemplated that such flowable material could be discharged from the apparatus 10 in other than bead form, e.g., into the cavity of a mold, in a flat spray pattern, etc.

Therefore, it is intended that the invention not be limited to the particular embodiment disclosed as the best mode contemplated for carrying out this invention, but that the invention will include all embodiments falling within the scope of the appended claims.

## Claims

1. Apparatus for intermittently discharging flowable material, comprising:
a manifold formed with a passageway;
a piston axially movable within said passageway in said manifold, said piston dividing said passageway into a first chamber and a second chamber, said first and second chambers each being formed with at least one opening for receiving flowable material and for discharging the flowable material;
first means for introducing the flowable material through said opening in said first chamber to pressurize said first chamber and force said piston to axially move in a first direction within said passageway toward said second chamber, and for permitting the flowable material within said first chamber to be discharged through said opening therein;
second means for introducing the flowable material through said opening in said second chamber to pressurize said second chamber and force said piston to axially move in a second direction within said passageway toward said first chamber, and for permitting the flowable material within said second chamber to be discharged through said opening therein;
control means for sequentially operating said first means and said second means so that the flowable material is first introduced into said first chamber and simultaneously discharged from said second chamber in response to movement of said piston in said first direction, and then so that the flowable material is introduced into said second chamber and simultaneously discharged from said first chamber in response to movement of said piston in said second direction.

2. The apparatus of claim 1 in which said at least one opening formed in each of said first and second chambers comprises an inlet and a separate outlet.

3. The apparatus of claim 2 in which said first means comprises:
a first supply means connected to said inlet of said first chamber and being adapted to connect to a source of the flowable material;
a first discharge means connected to said outlet of said first chamber;
said first supply means being movable to an open position to introduce the flowable material into said first chamber, and to a closed position to permit the discharge of flowable material from said first chamber;
said first discharge means being movable to a closed position to permit the introduction of the flowable material into said first chamber, and to an open position to permit the discharge of flowable material from said first chamber.

4. The apparatus of claim 2 in which said second means comprises:
a second supply means connected to said inlet of said second chamber and being adapted to connect to a source of the flowable material;
a second discharge means connected to said outlet of said second chamber;
said second supply means being movable to an open position to introduce the flowable material into said second chamber, and to a closed position to permit the discharge of flowable material from said second chamber;
said second discharge means being movable to a closed position to permit the introduction of the flowable material into said second chamber, and to an open position to permit the discharge of flowable material from said second chamber.

5. The apparatus of claim 1 in which said first chamber has a larger volume than said second chamber so that a greater quantity of flowable material is discharged from said first chamber upon movement of said piston in said second direction than is discharged from said second chamber upon movement of said piston in said first direction.

6. The apparatus of claim 1 in which said passageway is formed with a larger diameter portion defining said first chamber and a smaller diameter portion defining said second chamber.

7. The apparatus of claim 6 in which said piston has opposed ends, one end of said piston having a larger diameter substantially equal to the diameter of said first chamber, and the other end of said piston having a smaller diameter substantially equal to the diameter of said second chamber.

8. Apparatus for intermittently discharging flowable material, comprising:

a manifold formed with a passageway;

a piston axially movable within said passageway in said manifold, said piston dividing said passageway into a first chamber and a second chamber, said first and second chambers each being formed with an inlet for receiving flowable material and an outlet for discharging flowable material;

first supply means connected to said inlet of said first chamber and second supply means connected to said inlet of said second chamber, said first and second supply means each being movable between an open position in which flowable material is permitted to flow therethrough and enter said first and second chambers, respectively, and a closed position in which the flowable material is prevented from entering said first and second chambers;

first discharge means connected to said outlet of said first chamber and second discharge means connected to said outlet of said second chamber, said first and second discharge means each being movable between an open position in which the flowable material in said first and second chambers, respectively, is permitted to exit through said outlets thereof, and a closed position in which the flowable material is prevented from exiting said outlets;

control means for sequentially effecting a discharge of flowable material first from said first chamber and then from said second chamber, said control means being effective to simultaneously open said first supply means and close said first discharge means of said first chamber, and to simultaneously close said second supply means and open said second discharge means of said second chamber, said flowable material thereby being permitted to enter and fill said first chamber which pressurizes said first chamber and forces said piston to move axially within said passageway toward said second chamber, the flowable material contained within said second chamber being forced by movement of said piston through said outlet of said second chamber and into said open, second discharge means for discharge onto a substrate;

said control means thereafter being operative to simultaneously close said first supply means and open said first discharge means of said first chamber, and to simultaneously open said second supply means and close said second discharge means of said second chamber, said flowable material thereby being permitted to enter and fill said second chamber which pressurizes said second chamber and forces said piston to move axially within said passageway toward said first chamber, the flowable material contained within said first chamber being forced by movement of said piston through said outlet of said first chamber and into said open, first discharge means for discharge onto a substrate.

9. The apparatus of claim 8 in which said first and second discharge means each include a nozzle which discharges a bead of the flowable material.

10. The apparatus of claim 8 in which said manifold mounts a connector block, said manifold being formed with a connector passageway connected to said outlet of each said first and second chambers, and said connector block being formed with a common outlet passageway connected to a nozzle, each of said first and second discharge means being formed with an inlet connected to said connector passageway and an outlet connected to said common outlet passageway, said first and second discharge means each being effective to discharge flowable material through said common outlet passageway and to said nozzle for discharge onto a substrate.

11. Apparatus for intermittently depositing a flowable material onto a substrate, comprising:

a manifold formed with a passageway;

nozzle means connected to said manifold for discharging flowable material;

a piston axially movable within said passageway and having opposed ends, said piston dividing said passageway into a first chamber at one end of said piston and a second chamber at the other end of said piston, said first and second chambers each being formed with an inlet for receiving said flowable material and an outlet communicating with said nozzle means;

first supply means connected to said inlet of said first chamber and second supply means connected to said inlet of said second chamber, said first and second supply means each being movable between an open position in which flowable material is permitted to flow therethrough and enter said first and second chambers, respectively, and a closed position in which the flowable material is prevented from entering said first and second chambers;

first discharge means connected to said outlet of said first chamber and second discharge means connected to said outlet of said second chamber, said first and second discharge means each being movable between an open position in which the flowable material in said first and second chambers, respectively, is permitted to exit through said outlets thereof, and a closed position in which the flowable material is prevented from exiting said outlets;

control means for sequentially effecting a discharge of flowable material first from said first chamber and then from said second chamber, said control means being effective to simultaneously open said first supply means and close said first discharge means of said first chamber, and to simultaneously close said second supply means and open said second discharge means of said second chamber, said flowable material thereby being permitted to enter and fill said first chamber which pressurizes said first chamber and forces said piston to move axially within said passageway toward said second chamber, the flowable material contained within said second chamber being forced by movement of said piston through said outlet of said second chamber and into said open, second discharge means for discharge onto a substrate;

said control means thereafter being operative to simultaneously close said first supply means and open said first discharge means of said first chamber, and to simultaneously open said second supply means and close said second discharge means of said second chamber, said flowable material thereby being permitted to enter and fill said second chamber which pressurizes said second chamber and forces said piston to move axially within said passageway toward said first chamber, the flowable material contained within said first chamber being forced by movement of said piston through said outlet of said first chamber and into said open, first discharge means for discharge onto a substrate;

piston stop means carried within at least one of said first and second chambers for engaging an end of said piston, said piston stop means being effective to limit the extent of axial movement of said piston within said passageway and thus control the volume of flowable material forced by movement of said piston from said first and second chambers.

12. The apparatus of claim 11 in which said piston stop means comprises:

an adaptor mounted to said manifold at one end of said passageway;

a stop pin carried by said adaptor, an inner end of said stop pin extending within said first chamber in a position to engage said one end of said piston or into said second chamber in a position to engage said other end of said piston, an outer end of said stop pin being movably mounted to said adaptor to adjust the axial position of said inner end of said stop pin within said first chamber or said second chamber with respect to said piston.

13. The apparatus of claim 11 in which said piston stop means comprises a first piston stop carried within said first chamber and a second piston stop carried within said second chamber.

14. The method of intermittently discharging a flowable material, comprising:

positioning an axially movable piston within a passageway to form a first chamber on one side of said piston and a second chamber on the other side of said piston;

filling said first chamber with flowable material to pressurize said first chamber and force said piston to axially move in a first direction within said passageway toward said second chamber, the flowable material contained within said second chamber being discharged therefrom in response to movement of said piston in said first direction;

alternately filling said second chamber with flowable material to pressurize said second chamber and force said piston to axially move in a second direction within said passageway toward said first chamber, the flowable material contained within said first chamber being discharged therefrom in response to movement of said piston in said second direction.

15. The method of intermittently discharging a flowable material, comprising:

positioning an axially movable piston within a passageway to form a first chamber on one side of said piston and a second chamber on the other side of said piston;

filling said first chamber with flowable material and simultaneously discharging flowable material from said second chamber, including:

(i) introducing flowable material through an inlet into said first chamber and simultaneously closing an outlet of said first chamber to fill said first chamber with flowable material and force said piston to move in a first direction toward said second chamber; and

(ii) simultaneously closing an inlet to said second chamber and opening an outlet therein to permit the discharge of flowable material from said second chamber through said outlet thereof in response to movement of said piston in said first direction;

filling said second chamber with flowable material and simultaneously discharging flowable material from said first chamber, including:

(i) introducing flowable material through said inlet into said second chamber and simultaneously closing said outlet thereof to fill said first chamber with flowable material and force said piston to move in a second direction toward said first chamber; and

(ii) simultaneously closing said inlet to said first chamber and opening said outlet therein to permit the discharge of flowable material from said first chamber through said outlet thereof in response to movement of said piston in said second direction.

16. The method of claim 15 in which said step of simultaneously closing an inlet in said second chamber and opening an outlet therein includes discharging flowable material frcm said second chamber through said outlet thereof into a first nozzle, and wherein said step of simultaneously closing an inlet in said first chamber and opening an outlet therein includes discharging flowable material from said first chamber through said outlet thereof into a second nozzle.

17. The method of claim 15 in which said step of simultaneously closing an inlet in said second chamber and opening an outlet therein includes discharging flowable material from said second chamber through said outlet thereof into a first nozzle, and wherein said step of simultaneously closing an inlet in said first chamber and opening an outlet therein includes discharging flowable material from said first chamber through said outlet therein into said first nozzle.

FIG. I

FIG. 5

FIG. 2

FIG. 3

FIG. 4

CONTROLLER

FIG. 6

FIG. 7

CONTROLLER

EP 0 443 276 A1

FIG. 8

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | GB-A-2 165 525 (PORTER LANCASTRIAN LTD) * Abstract; page 1, line 127 - page 2, line 30; claim 1; fig. * | 1-4,8,9 ,14-17 | G 01 F 11/04 B 05 C 5/04 |
| Y A | US-A-2 165 525 | 11 5,6,10 | |
| Y A | US-A-3 292 824 (L.J. ARP) * Claim 1; figure 1 * | 11 1,8,12, 14 | |

TECHNICAL FIELDS SEARCHED (Int. Cl.5)

B 05 C
G 01 F

The present search report has been drawn up for all claims

| Place of search | Date of completion of the search | Examiner |
|---|---|---|
| THE HAGUE | 07-08-1990 | GUASTAVINO L. |